# EUROPEAN PATENT APPLICATION

(11) **EP 4 793 626 A1**
(43) Date of publication of application: **19.08.2026**
(21) Application number: 24876927.5
(22) Date of filing: 08.08.2024
(51) Int. Cl.: G01N 21/33, G01N 21/61

(54) **GAS CONCENTRATION MEASURING INSTRUMENT AND GAS CONCENTRATION MEASURING METHOD**

(30) Priority: 13.10.2023 JP 2023177817; 25.12.2023 JP 2023218578
(71) Applicant: Taiyo Nippon Sanso Corporation, Tokyo 142-8558 (JP)
(72) Inventor: TAKA Hiroshi, Tokyo 142-8558 (JP)
(74) Representative: Scott, Stephen John
(86) International application number: PCT/JP2024/028493
(87) International publication number: WO 2025/079327

(57) **Abstract**

Provided are a gas concentration measuring device and a gas concentration measuring method that improve sensitivity during measurement when ultraviolet light having a wavelength of 115 nm or more and 320 nm or less is used as the light source for measurement. A gas concentration measuring device (100) includes a cell (1) through which a gas to be measured including a component to be measured and a carrier gas flows, a light source unit (2) that irradiates the gas to be measured flowing through the cell (1) with ultraviolet light having a wavelength of 115 nm or more and 320 nm or less, a light receiver (3) that receives transmitted light of the ultraviolet light that has passed through the gas to be measured, a first container (51) enclosing a space including an optical path (L) of the ultraviolet light between the light source unit (2) and the cell (1), and a second container (52) enclosing a space including an optical path (L) of the transmitted light between the cell (1) and the light receiver (3).

## Description

### TECHNICAL FIELD

The present disclosure relates to a gas concentration measuring device and a gas concentration measuring method.

### BACKGROUND

In semiconductor manufacturing processes, highly accurate control of the concentrations of various raw material gases supplied to manufacturing apparatuses is important. For example, for material gases used in semiconductor manufacturing, such as diborane gas, even higher precision concentration control is required. However, highly reactive gases such as diborane gas are prone to chemical changes, such as decomposition, during the storage period after being stored in storage containers such as tanks or cylinders until they are used in semiconductor manufacturing, and also during supply, making concentration control during semiconductor manufacturing difficult. Therefore, there is a need for concentration control by measuring the gas concentration on-line or in-line during supply in semiconductor manufacturing, for example. Known methods of measuring gas concentrations include a method using ultrasonic waves, a method using infrared light, and a method using vacuum ultraviolet light.

JP 2014-74629 A (Patent Literature (PTL) 1) discloses a gas sensor. This gas sensor includes a tube into which gas is introduced, a light source that irradiates light into the tube, a first detection element, a second detection element, and a temperature measurement element that measures the temperature of the measurement environment, and also includes a calculation unit for performing calculations using the output values of the first detection element and the second detection element and the measurement values from the temperature measurement element. The light source is an infrared light source that irradiates infrared light.

JP 2016-183972 A (PTL 2) discloses a vacuum ultraviolet absorption spectroscopy system. The spectroscopic system includes a vacuum ultraviolet light source module, a flow cell, and a detector module. A light beam passing through the flow cell is focused onto the entrance aperture of a spectrometer. The light passing through the aperture is collected and diffracted by a grating, focused onto a detector, and recorded by a computer. In this spectroscopic system, the environment within the light source module is maintained so that the concentration of vacuum ultraviolet absorbing species (such as oxygen and water) is sufficiently low so as not to significantly absorb the photon flux of the vacuum ultraviolet light. It is described that this can be achieved by a vacuum or by purging with a gas that does not absorb vacuum ultraviolet light, such as nitrogen, helium, or hydrogen.

### CITATION LIST

### Patent Literature

PTL 1: JP 2014-74629 A
PTL 2: JP 2016-183972 A

### SUMMARY

### (Technical Problem)

Measurement of gas concentration using ultrasonic waves or infrared light does not provide sufficient sensitivity and cannot meet the demand for more accurate gas concentration control in semiconductor manufacturing processes. Furthermore, measurement of gas concentration using ultrasonic waves or infrared light does not always obtain sufficient noise resistance (high S/N ratio).

Short-wavelength ultraviolet light such as vacuum ultraviolet light and deep ultraviolet light, specifically ultraviolet light with a wavelength of 115 nm or more and 320 nm or less (hereinafter also referred to as ultraviolet light in a specific wavelength band for the sake of convenience), is strongly absorbed by many substances and is therefore suitable for use as light for measurement. However, since ultraviolet light in a specific wavelength band is characterized by being strongly absorbed by many substances, it is easily affected by gases that absorb vacuum ultraviolet light, such as oxygen in the atmosphere, when used as light for measurement. Therefore, when ultraviolet light in a specific wavelength band is used as a light source for measurement, sufficient sensitivity and noise resistance (high S/N ratio) are not always obtained during the measurement.

For example, in a gas concentration measuring device that uses vacuum ultraviolet light, such as the vacuum ultraviolet absorption spectroscopy system disclosed in PTL 2, in order to suppress absorption of vacuum ultraviolet light within the light source module, operations such as evacuating the inside of the light source module or replacing the gas with a gas that does not absorb vacuum ultraviolet light are performed. In particular when a spectroscope is used in a gas concentration measuring device that utilizes ultraviolet light of a specific wavelength band, such as vacuum ultraviolet light, the same measures as those applied to the light source module must also be taken within the spectroscope. Otherwise, absorption of ultraviolet light of the specific wavelength band may occur inside the spectroscope, and sufficient sensitivity may not be obtained during measurement. However, if constraints are imposed on the configuration of the spectroscope so as to make it suitable for controlling the atmosphere inside the spectroscope, sufficient sensitivity may still not be obtained when measuring using ultraviolet light in a specific wavelength band. Therefore, demand exists for improved sensitivity during measurement in gas concentration measuring devices and gas concentration measuring methods that use ultraviolet light in a specific wavelength band as a light source for gas concentration measurement.

The present disclosure, conceived in consideration of the above-described circumstances, aims to provide a gas concentration measuring device and a gas concentration measuring method that improve sensitivity during measurement when ultraviolet light having a wavelength of 115 nm or more and 320 nm or less is used as the light source for measurement.

### (Solution to Problem)

To achieve the aforementioned aim, a gas concentration measuring device according to the present disclosure includes:
a cell through which a gas to be measured including a component to be measured and a carrier gas flows;
a light source configured to irradiate the gas to be measured flowing through the cell with ultraviolet light having a wavelength of 115 nm or more and 320 nm or less;
a light receiver configured to receive transmitted light of the ultraviolet light that has passed through the gas to be measured;
a first container enclosing a space including an optical path of the ultraviolet light between the light source and the cell; and
a second container enclosing a space including an optical path of the transmitted light between the cell and the light receiver.

To achieve the aforementioned aim, a gas concentration measuring method according to the present disclosure includes:
causing a gas to be measured to flow through a cell, the gas to be measured being a mixture of a component to be measured that has an absorption wavelength in a wavelength band of ultraviolet light having a wavelength of 115 nm or more and 320 nm or less and a carrier gas that has no absorption wavelength in the wavelength band of the ultraviolet light;
irradiating the gas to be measured flowing through the cell with ultraviolet light; and
receiving transmitted light of the ultraviolet light that has passed through the gas to be measured,
wherein an optical path of the ultraviolet light is evacuated or filled with a non-interfering gas that does not have an absorption wavelength overlapping with the component to be measured in the wavelength band of the ultraviolet light.

### (Advantageous Effect)

According to the present disclosure, a gas concentration measuring device and a gas concentration measuring method that improve sensitivity during measurement when ultraviolet light having a wavelength of 115 nm or more and 320 nm or less is used as the light source for measurement can be provided.

### BRIEF DESCRIPTION OF THE DRAWINGS

In the accompanying drawings:
FIG. 1 is an explanatory diagram of the configuration of a gas concentration measuring device according to an embodiment;
FIG. 2 is a graph illustrating the results of Examples 1 to 5;
FIG. 3 is a graph illustrating the results of Examples 6 to 9;
FIG. 4 is a graph illustrating the results of Comparative Example 1; and
FIG. 5 is an explanatory diagram of the configuration of another gas concentration measuring device.

### DETAILED DESCRIPTION

A gas concentration measuring device and a gas concentration measuring method according to an embodiment of the present disclosure will be described with reference to the drawings.

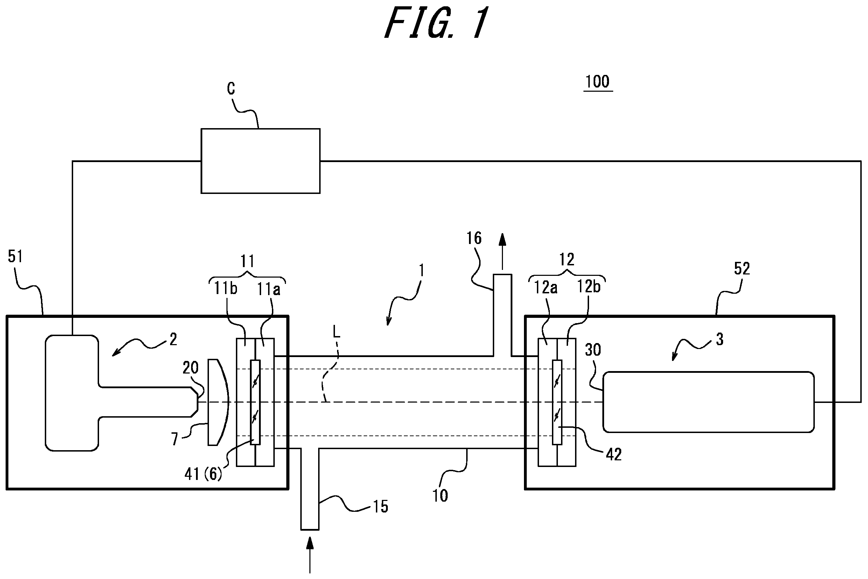

FIG. 1 is an explanatory diagram of the configuration of a gas concentration measuring device 100 according to the present embodiment. The gas concentration measuring device 100 includes a cell 1 through which a gas to be measured including a component to be measured and a carrier gas flows, a light source unit 2 that irradiates the gas to be measured flowing through the cell 1 with ultraviolet light having a wavelength of 115 nm or more and 320 nm or less, a light receiver 3 that receives transmitted light of the ultraviolet light that has passed through the gas to be measured, a first container 51 enclosing a space including an optical path L of the ultraviolet light between the light source unit 2 and the cell 1, and a second container 52 enclosing a space including an optical path L of the transmitted light between the cell 1 and the light receiver 3.

A gas concentration measuring method according to the present embodiment includes causing a gas to be measured to flow through the cell 1, the gas to be measured being a mixture of a component to be measured that has an absorption wavelength in a wavelength band of ultraviolet light having a wavelength of 115 nm or more and 320 nm or less and a carrier gas that has no absorption wavelength in the wavelength band of the ultraviolet light, irradiating the gas to be measured flowing through the cell 1 with the ultraviolet light of this wavelength band, and receiving transmitted light of the ultraviolet light that has passed through the gas to be measured, wherein an optical path L of the ultraviolet light (excluding the inside of the cell 1) is evacuated or filled with a non-interfering gas that does not have an absorption wavelength overlapping with the component to be measured in the wavelength band of the ultraviolet light of this wavelength band.

The gas concentration measuring device 100 can realize the above-described gas concentration measuring method. According to the gas concentration measuring device 100 and the gas concentration measuring method, when ultraviolet light is used as the light source for measurement, the compatibility between high sensitivity and noise resistance during measurement can be improved.

The gas concentration measuring device 100 and the gas concentration measuring method will be described in detail below.

As described above, the gas concentration measuring device 100 includes the cell 1, the light source unit 2, the light receiver 3, and a filter window 6. As an example, the gas concentration measuring device 100 may further include a first container 51 enclosing a space including the optical path L of the ultraviolet light between the light source unit 2 and the cell 1, a second container 52 enclosing a space including the optical path L of the transmitted light between the cell 1 and the light receiver 3, and a condenser lens 7 arranged on the optical path L of the ultraviolet light between the light source unit 2 and the cell 1. The gas concentration measuring device 100 measures the concentration of a component to be measured, in a gas to be measured that includes the component to be measured and a carrier gas, based on the absorption of ultraviolet light by the component to be measured. Hereinafter, a wavelength range of 115 nm or more and 320 nm or less may be referred to as a specific wavelength band.

The carrier gas is a gas with which the component to be measured is mixed. The gas concentration measuring device 100 measures the concentration of the component to be measured in the gas to be measured on the assumption that the carrier gas does not have an absorption wavelength that overlaps with the component to be measured in a specific wavelength band.

The carrier gas preferably does not have any absorption wavelength in a specific wavelength band, particularly in the wavelength range of 130 nm or more and 320 nm or less. Furthermore, the carrier gas is preferably a gas available at low cost. Examples of such carrier gases are N₂ (nitrogen), H₂ (hydrogen), and CO₂ (carbon dioxide).

The component to be measured may be any gaseous substance that has an absorption wavelength in a specific wavelength band. Examples of components to be measured (gases) that are gaseous components with absorption wavelengths in a specific wavelength band and require highly accurate concentration control in the semiconductor manufacturing process are B₂H₆ (diborane), N₂H₄ (hydrazine), Si₂H₆ (disilane), Ge₂H₆ (digermane), and MoO₂Cl₂ (vaporized molybdenum dichloride dioxide). These gases are used as source gases in semiconductor manufacturing processes. These gases B₂H₆, N₂H₄, Si₂H₆, Ge₂H₆, and MoO₂Cl₂ exhibit large absorption in the specific wavelength bands of approximately 115 nm to 140 nm, 130 nm to 195 nm, 125 nm to 170 nm, 120 nm to 185 nm, and 245 nm to 315 nm, respectively.

The components to be measured are not limited to raw material gases but may also be impurities. The case in which IPA (isopropanol) is mixed as an impurity gas in carbon dioxide as a carrier gas is one example.

The cell 1 is a container through which the gas to be measured flows and through which ultraviolet light of a specific wavelength band passes through the gas to be measured. The cell 1 introduces ultraviolet light of a specific wavelength band irradiated from the light source unit 2 into the cell 1, transmits the ultraviolet light through the gas to be measured, and further guides transmitted light of the ultraviolet light of the specific wavelength band that has been transmitted through the gas to be measured outside the cell 1 to be received by the light receiver 3. The light source unit 2 and the light receiver 3 will be described later.

The cell 1 includes a cylindrical portion 10 having a linear internal space, an incident portion 11 arranged at one end of the cylindrical portion 10, an exit portion 12 arranged at the end of the cylindrical portion 10 opposite the incident portion 11, an inlet 15 for supplying the gas to be measured to the cylindrical portion 10, and an outlet 16 for discharging the gas to be measured from the cylindrical portion 10. In the cell 1, the incident portion 11 is arranged on the side of the light source unit 2, and the exit portion 12 is arranged on the side of the light receiver 3.

In the cell 1, ultraviolet light in a specific wavelength band is transmitted through the gas to be measured while the gas to be measured flows through the cylindrical portion 10. The gas to be measured is supplied to the cylindrical portion 10 through the inlet 15. The gas to be measured supplied to the cylindrical portion 10 is discharged from the outlet 16.

For example, when the gas to be measured is a manufacturing gas containing raw material gas supplied to semiconductor manufacturing apparatuses, the inlet 15 is connected to the upstream side of the supply pipe for the manufacturing gas, and the outlet 16 is connected to the downstream side of the supply pipe for the manufacturing gas. In this case, the inlet 15, the cylindrical portion 10, and the outlet 16 may be part of the supply pipe for the manufacturing gas or may be a bypass pipe of the supply pipe for the manufacturing gas. That is, the gas concentration measuring device 100 can be used for both in-line measurement and on-line measurement.

The inlet 15 and the outlet 16 may be arranged offset towards one end and the other end of the cylindrical portion 10, respectively. This makes it easier to form a uniform flow of the gas to be measured within the cylindrical portion 10 along the axial direction of the cylindrical portion 10. FIG. 1 illustrates a case in which the inlet 15 is arranged closer to the end of the cylindrical portion 10 on the side where the incident portion 11 is arranged, and the outlet 16 is arranged closer to the end of the cylindrical portion 10 on the side where the exit portion 12 is arranged. The arrangement of the inlet 15 and the outlet 16 may be reversed from that illustrated in FIG. 1.

The incident portion 11 is a light inlet that introduces ultraviolet light of a specific wavelength band emitted from the light source unit 2 into the cell 1 (the internal space of the cell 1). The incident portion 11 has a window 41 that selectively transmits all wavelengths of ultraviolet light in a specific wavelength band or only transmits a specific wavelength band of ultraviolet light within the specific wavelength band and introduces the transmitted light into the cell 1. For example, the window 41 may have a flat plate shape such as a disk shape. Selecting and transmitting only a specific wavelength band can be restated as cutting off light in wavelength bands other than the specific wavelength band.

The incident portion 11 may, for example, be formed in the shape of a flange that sandwiches and fixes the window 41. As an example, FIG. 1 illustrates a case in which the incident portion 11 includes an annular, plate-shaped seat 11a whose inner periphery is fixed to an end of the cylindrical portion 10 and an annular, plate-shaped lid 11b fixed to the seat 11a by bolts and nuts, for example. The window 41 is sandwiched between the seat 11a and the lid 11b and is fixed to the incident portion 11.

The exit portion 12 is a light exit that guides transmitted light from inside the cell 1 to the outside of the cell 1. The exit portion 12 has a window 42 that selectively transmits all wavelengths of ultraviolet light in a specific wavelength band or only transmits a specific wavelength band of ultraviolet light within the specific wavelength band and guides the transmitted light to the outside of the cell 1. The window 42 may have a flat plate shape similar to the window 41.

The exit portion 12 may, like the incident portion 11, be formed in the shape of a flange that sandwiches and fixes the window 42. As an example, FIG. 1 illustrates a case in which the exit portion 12 includes an annular, plate-shaped seat 12a whose inner periphery is fixed to an end of the cylindrical portion 10 and an annular, plate-shaped lid 12b fixed to the seat 12a by bolts and nuts, for example. The window 42 is sandwiched between the seat 12a and the lid 12b and is fixed to the exit portion 12.

When the windows 41 and 42 are flat, the windows 41 and 42 are preferably arranged so that the plate surfaces thereof are perpendicular to the axial direction of the cylindrical portion 10.

At least one of the window 41 and the window 42 may be a filter window 6 having a substrate (window) formed of a material that can transmit ultraviolet light of a specific wavelength band, and an optical filter arranged on the substrate. The optical filter may be a bandpass filter that selectively transmits only a further specific wavelength band within the specific wavelength band. In the present embodiment, the specific wavelength band that is transmitted by the optical filter (filter window 6) includes at least the absorption wavelength of the component to be measured.

The bandwidth of the wavelength band transmitted by this optical filter (filter window 6) may be 5 nm or more and 50 nm or less and is preferably 10 nm or more and 40 nm or less. This may allow the gas concentration measuring device 100 to achieve both high sensitivity and high noise resistance. In the present embodiment, the bandwidth refers to the wavelength width between the long wavelength side and the short wavelength side, at which the maximum transmittance of the wavelength band transmitted by the optical filter (filter window 6) is 50 %. In addition, in the present embodiment, the wavelength band that the optical filter transmits (hereinafter also referred to simply as the transmitted wavelength band) refers to a band that is equal to or greater than the wavelength on the long wavelength side and equal to or less than the wavelength on the short wavelength side, at which the maximum transmittance of the wavelength band transmitted by the optical filter is 50 %. One or both of the window 41 and the window 42 may be the filter window 6. In the gas concentration measuring device 100, the filter window 6 may be able to reduce noise (improve the S/N ratio) in the light received by the below-described light receiver 3.

The other of the window 41 and the window 42 may be a window formed of a material that can transmit ultraviolet light in a specific wavelength band.

The substrate formed of a material capable of transmitting ultraviolet light in a specific wavelength band or the window formed of a material capable of transmitting ultraviolet light in a specific wavelength band may, for example, be formed of MgF₂ (magnesium fluoride). MgF₂ has a high transmittance for ultraviolet light in a specific wavelength band and is therefore suitable as a material for transmitting ultraviolet light in a specific wavelength band.

FIG. 1 illustrates an example in which the window 42 is a window formed from a material that can transmit ultraviolet light in a specific wavelength band, and the window 41 is a filter window 6 that has a substrate formed from a material that can transmit ultraviolet light in a specific wavelength band and an optical filter arranged on the substrate.

The light source unit 2 is a unit equipped with a light source that emits ultraviolet light in a specific wavelength band. The light source unit 2 has a light source of ultraviolet light in a specific wavelength band, such as a deuterium lamp, and an irradiation window 20 that irradiates the window 41 with ultraviolet light in the specific wavelength band. For example, the irradiation window 20 is disposed parallel to the plate surface of the window 41. The irradiation window 20 preferably irradiates the window 41 with ultraviolet light in the specific wavelength band so that the optical path L is perpendicular to the plate surface of the window 41.

The light source of the light source unit 2 does not need to be capable of emitting light of all wavelengths of ultraviolet light in the specific wavelength band (a continuous spectrum in the specific wavelength band) but preferably emits light in a wavelength band with a width of at least 100 nm (half-width of 50 nm) in the specific wavelength band. Other than deuterium lamps, examples of such light sources include LED light sources that are not single wavelength and xenon lamps such as mercury xenon lamps. The light source of the light source unit 2 preferably continuously includes light having a wavelength range of 115 nm or more and 320 nm or less, that is, a continuous spectrum in the wavelength range of 115 nm or more and 320 nm or less. Furthermore, the light source unit 2 may also emit light of wavelengths other than the specific wavelength band (for example, light of a wavelength band close to the specific wavelength band). When the component to be measured contained in the gas to be measured is limited to a specific component, the light source of the light source unit 2 may be a single-wavelength light source in a specific wavelength band, such as a light source having emission characteristics of a bright line spectrum such as a laser light source, a light source that extracts only specific wavelengths using an optical filter, or a light source with a narrow wavelength band of about 20 nm (half-width of 10 nm) in the specific wavelength band. In this case, the absorption wavelength of the component to be measured and the wavelength of the light source are made to overlap.

The light source unit 2 may irradiate ultraviolet light of a specific wavelength band from the irradiation window 20 onto the window 41 via the condenser lens 7. The condenser lens 7 is an optical mechanism that refracts incident light and focuses it into parallel light or toward a focal point. The condenser lens 7 may be a single lens or may be an optical mechanism in which a plurality of lenses and reflectors are combined. When the condenser lens 7 is a single lens, the condenser lens 7 may be made of a material that can transmit ultraviolet light in a specific wavelength band, such as MgF₂ (magnesium fluoride).

The light source unit 2 may cause ultraviolet light of a specific wavelength band irradiated from the irradiation window 20 to be incident on the condenser lens 7, and the ultraviolet light of the specific wavelength band condensed by the condenser lens 7 may be irradiated onto the window 41. The condenser lens 7 preferably converts the ultraviolet light of a specific wavelength band condensed by the condenser lens 7 into parallel light or causes the focal point of the condensed light to be positioned at the below-described light receiver 3. This makes it possible to improve the sensitivity of light reception in the light receiver 3.

The light receiver 3 is a sensor device having a photoelectric conversion function of receiving transmitted light, converting the received transmitted light into an electrical signal such as a voltage or current corresponding to the intensity of the received transmitted light, and sending the electrical signal to a controller C that includes an analysis device such as an AD converter, a computer, or the like. An example of the light receiver 3 is a sensor device equipped with a photomultiplier tube.

The transmitted light that passes through the filter window 6 and contains only a specific wavelength band is incident on the light receiver 3. This can improve the sensitivity of light reception in the light receiver 3 and reduce noise (improve noise resistance, i.e., the S/N ratio).

The light receiver 3 does not have to be capable of detecting the spectrum of the transmitted light or of emitting a signal corresponding to the spectrum. It suffices for the light receiver 3 to receive transmitted light in a specific wavelength band and transmit a signal corresponding to the intensity of the received transmitted light. This enables the gas concentration measuring device 100 to measure gas concentrations with high sensitivity. The light receiver 3 preferably has no sensitivity to wavelength bands other than the specific wavelength band. The light receiver 3 preferably has sensitivity over the entire wavelength band from 115 nm to 320 nm.

The light receiver 3 more preferably has sensitivity in the wavelength band (transmitted wavelength band) that is transmitted by the filter window 6 and no sensitivity in other wavelength bands. This allows the gas concentration measuring device 100 to measure gas concentrations with even higher sensitivity and higher noise resistance.

When the light receiver 3 is a photomultiplier tube, the light receiver 3 has a light guide window 30 that guides transmitted light into the photomultiplier tube. As an example, the light guide window 30 is disposed parallel to the plate surface of the window 42. The light guide window 30 is preferably arranged to be intersected perpendicularly by the optical path L.

It should be noted that no spectroscope is disposed between the light source unit 2 and the light receiver 3, i.e., on the optical path L. That is, in the gas concentration measuring method according to the present embodiment, no spectral separation is performed during light reception by the light receiver 3.

The irradiation window 20, the condenser lens 7, the window 41, the cylindrical portion 10, the window 42 (filter window 6), and the light guide window 30 may be arranged in this order along the optical path L in overlap with the optical path L (i.e., on the optical path L). In the present embodiment, the optical path L may be deflected using a reflector or the like. The axial direction of the cylindrical portion 10 is preferably arranged along the optical path L as illustrated in FIG. 1. This increases the distance that ultraviolet light in the specific wavelength band travels through the gas to be measured, thereby improving the sensitivity during measurement by the gas concentration measuring device 100.

The irradiation window 20 and the window 41 are preferably not in contact with each other but rather spaced a certain distance apart. The condenser lens 7, when included, is preferably disposed between the irradiation window 20 and the window 41. The irradiation window 20 and the condenser lens 7 are preferably spaced a certain distance apart. The condenser lens 7 and the window 41 are also preferably spaced a certain distance apart. Similarly, the window 42 and the light guide window 30 are preferably not in contact with each other but rather spaced a certain distance apart.

The first container 51 is a container that encloses a space including an optical path L of ultraviolet light of a specific wavelength band between the light source unit 2 and the cell 1. The first container 51 can control the internal atmosphere to be a vacuum or to be filled with a specific gas by creating a vacuum inside the container, sealing a specific gas inside the container, or allowing a specific gas to flow inside the container so that gases other than the specific gas do not enter the inside of the container.

The first container 51 is preferably fixed to a base on which the light source unit 2 and the cell 1 are placed as needed and is also preferably removable. The first container 51 is preferably made of a material that does not transmit light (especially ultraviolet light in a specific wavelength band), such as metal.

When a specific gas is sealed inside the first container 51 or when a specific gas is caused to flow inside the container, the specific gas is preferably a non-interfering gas that does not have an absorption wavelength overlapping with the component to be measured in a specific wavelength band, in particular, an absorption wavelength in the wavelength range of 130 nm or more and 320 nm or less. By sealing a non-interfering gas inside the first container 51 or allowing a non-interfering gas to flow therein, thus filling the inside of the first container 51 with the non-interfering gas, it is possible to suppress attenuation due to absorption other than absorption caused by the component to be measured in the cell 1, i.e., the attenuation of ultraviolet light of a specific wavelength band on the optical path L of ultraviolet light of a specific wavelength band between the light source unit 2 and the cell 1. This improves the sensitivity of the gas concentration measuring device 100 during measurement.

It suffices for the first container 51 to enclose at least the space including the optical path L between the irradiation window 20 and the incident portion 11, but the first container 51 may enclose an area beyond this range. The first container 51 preferably encloses a space including the irradiation window 20, the optical path L between the irradiation window 20 and the incident portion 11, and the incident portion 11 (the end of the cell 1 on the light source unit 2 side). This makes it possible to reliably evacuate the space including the optical path L between the irradiation window 20 and the incident portion 11 or to fill the space with a non-interfering gas. FIG. 1 illustrates an example in which the first container 51 is a container that includes and surrounds the incident portion 11, the condenser lens 7, and the light source unit 2.

The second container 52 is a container that encloses a space including an optical path L of ultraviolet light of a specific wavelength band between the cell 1 and the light receiver 3. The second container 52 can control the internal atmosphere to be a vacuum or to be filled with a specific gas by creating a vacuum inside the container, sealing a specific gas inside the container, or allowing a specific gas to flow inside the container so that gases other than the specific gas do not enter the inside of the container.

The first container 51 is preferably fixed to a base or the like on which the cell 1 and the light receiver 3 are placed as needed and is also preferably removable. The first container 51 is preferably made of a material that does not transmit light (especially ultraviolet light in a specific wavelength band), such as metal.

The second container 52 is filled with a non-interfering gas, like the first container 51. This improves the sensitivity of the gas concentration measuring device 100 during measurement.

It suffices for the second container 52 to enclose at least the space including the optical path L between the exit portion 12 and the light guide window 30, but the second container 52 may enclose an area beyond this range. The second container 52 preferably encloses a space including the exit portion 12, the optical path L between the exit portion 12 (the end of the cell 1 on the side of the light receiver 3) and the light guide window 30, and the light guide window 30. This makes it possible to reliably evacuate the space including the optical path L between the exit portion 12 and the light guide window 30 or to fill the space with a non-interfering gas. FIG. 1 illustrates an example in which the second container 52 is a container that includes and surrounds the exit portion 12 and the light guide window 30.

Examples of non-interfering gases are nitrogen, hydrogen, helium, argon, and carbon dioxide. Nitrogen, hydrogen, and carbon dioxide do not have absorption wavelengths in a specific wavelength band and are available at low cost. In particular, the non-interfering gas is preferably the same type of gas as the carrier gas. If the non-interfering gas is the same type of gas as the carrier gas, even if a leak occurs causing gas inside the first container 51 or the second container 52 to enter the cell 1, the impact on the gas to be measured can be minimized. In particular, when the gas concentration measuring device 100 is used for in-line measurement, the influence on downstream manufacturing processes can be minimized.

The above-described gas concentration measuring device 100 can, as described below, measure the concentration of a component to be measured, which has an absorption wavelength in a specific wavelength band, in a gas to be measured containing a mixture of the component to be measured and a carrier gas that does not have an absorption wavelength in the specific wavelength band. This measurement can be performed by the following procedure.

First, the gas to be measured is passed through the cell 1 (an example of a flow process), and then ultraviolet light of a specific wavelength band is irradiated, from the light source unit 2 via the condenser lens 7 and the window 41, onto the gas to be measured flowing through the cell 1 (an example of an irradiation process). The light receiver 3 then receives the light transmitted through the gas to be measured via the window 42 (an example of a light reception process).

In this case, the ultraviolet light in a specific wavelength band irradiated by the light source unit 2 is condensed by the condenser lens 7 and then irradiated onto the gas to be measured, thereby improving the sensitivity of light reception in the light receiver 3.

In this case, by using the window 41 or the window 42 as the filter window 6 (an example of a filter process), a specific wavelength band can be selected and received by the light receiver 3, thereby reducing the noise during light reception by the light receiver 3 (improving noise resistance, i.e., the S/N ratio). For example, if the window 42 is used as a filter window, the window 42 as a filter window can cut the light generated in the cell 1 (for example, the light emitted by excitation with ultraviolet light of a specific wavelength band) and the light that enters the cell 1 from sources other than the light source unit 2, thereby reducing the noise during light reception by the light receiver 3. Furthermore, if the window 41 is used as a filter window, the decomposition and light emission of the component to be measured in the cell 1 caused by ultraviolet light of a specific wavelength band can be reduced, thereby reducing the noise during light reception by the light receiver 3.

In this case, by not placing a spectroscope on the optical path L or by not providing the light receiver 3 with a spectroscopic function, the sensitivity of the light receiver 3 to light reception can be improved, and noise can be reduced.

By evacuating the optical path L of the ultraviolet light of the specific wavelength band (excluding the inside of the cell 1) or filling it with a non-interfering gas, which is a gas that does not have an absorption wavelength overlapping with the component to be measured in the specific wavelength band, it is possible to prevent the transmitted light that has passed through the gas to be measured from being attenuated for reasons other than absorption by the gas to be measured, thereby improving the sensitivity of light reception in the light receiver 3 and reducing noise (improving the S/N ratio). The non-interfering gas is preferably the same type of gas as the carrier gas. For example, the carrier gas or non-interfering gas is preferably nitrogen, hydrogen, helium, or argon, which have no absorption wavelength in the specific wavelength band.

One type of component to be measured is preferably contained in the gas to be measured. By limiting the component to be measured to one type, it is possible to perform measurements with high sensitivity, resistance to noise, and a high S/N ratio.

As a result of the gas concentration measuring device 100 not using a spectroscope and not identifying the absorption wavelength by spectroscopy, the sensitivity of the light receiver 3 for light reception can be utilized as is to achieve increased measurement sensitivity in the gas concentration measuring device 100. Furthermore, the gas concentration measuring method according to the present embodiment achieves highly sensitive measurements by utilizing the features of the gas concentration measuring device 100 and measuring a gas to be measured containing a mixture of a component to be measured, which has an absorption wavelength in a specific wavelength band, and a carrier gas that has no absorption wavelength in the specific wavelength band.

As described above, the gas concentration measuring device and gas concentration measuring method according to the present embodiment have high sensitivity, are resistant to noise, and can perform measurements with a high S/N ratio. Because of this high sensitivity, resistance to noise, and the ability to perform measurements with a high S/N ratio, the gas concentration measuring device and gas concentration measuring method of the present embodiment are particularly suitable for controlling the concentration of material gases used in semiconductor manufacturing in the semiconductor manufacturing process, particularly controlling concentration using in-line measurement or on-line measurement. In greater detail, since the gas concentration measuring device and gas concentration measuring method according to the present embodiment realize measurements with high sensitivity and a high S/N ratio, it is therefore possible, when controlling the concentration of material gases by in-line or on-line measurement, to realize precise concentration control and to detect abnormalities (unexpected fluctuations in concentration) in a short period of time. This allows these measurement results to be quickly fed back to the manufacturing process, thereby contributing to an improvement in manufacturing yield. For example, a measuring device or measuring method with low sensitivity and a low S/N ratio cannot perform precise concentration control, and it takes time to determine whether the measurement result is an abnormal value affected by noise, making it difficult to provide rapid feedback to the manufacturing process.

### EXAMPLES

Hereinafter, a gas concentration measuring device and a gas concentration measuring method will be described based on Examples.

### (Example 1)

In the present Example, a mixed gas obtained by mixing N₂H₄ (hydrazine), as a component to be measured that has an absorption wavelength in a specific wavelength band, with N₂ (nitrogen), as a carrier gas that does not have an absorption wavelength in the specific wavelength band, was used as the gas to be measured, and the relationship between the concentration of the component to be measured in the mixed gas and the voltage from the light receiver was determined using a measuring device similar to the gas concentration measuring device described above. In the present Example, a light source with a wavelength band of 115 nm or more and 400 nm or less (manufactured by Hamamatsu Photonics, model: L7293) was used as the light source of the light source unit. That is, the light from this light source continuously includes light with a range of wavelengths of 115 nm or more and 320 nm or less. The window at the incident portion was a filter window having a transparent substrate made of magnesium fluoride and an optical filter disposed on the substrate. The optical filter used in the filter window was a filter transmitting only vacuum ultraviolet light with a wavelength of around 147 nm, which is the central absorption wavelength (the central wavelength of the wavelength band where large absorption occurs) of hydrazine (central wavelength: 147 nm, bandwidth: 20 nm, transmitted wavelength band: 137 nm or more and 157 nm or less). The light receiver used was equipped with a photomultiplier tube (manufactured by Hamamatsu Photonics, model R6836) having sensitivity to light of 115 nm or more and 320 nm or less. The insides of the first container and second container, i.e., the space including the optical path between the irradiation window of the light source unit and the incident portion of the cell, the space including the incident portion of the cell, the space including the exit portion of the cell, and the space including the optical path between the exit portion of the cell and the light guide window of the light receiver, were filled with nitrogen to create a nitrogen atmosphere.

In the present Example, the concentration of the component to be measured was varied in the range of 0.1 vol% (hereinafter, vol% will be simply referred to as %) to 1.0 %, and the corresponding voltage output from the light receiver was measured to determine the relationship between the concentration of the component to be measured and the voltage output. The least squares method was then applied to the values of the concentration of the component to be measured and the voltage output, an approximate line (approximate equation) for the concentration of the component to be measured and the voltage output was determined using a linear function, and the lower limit of detection representing the measurement sensitivity of the measuring device and the R² value (coefficient of determination) representing the measurement noise were determined. In the present Example, the voltage output was determined while varying the concentration of the component to be measured among five levels: 0.1 %, 0.2 %, 0.5 %, 0.8 %, and 1.0 %.

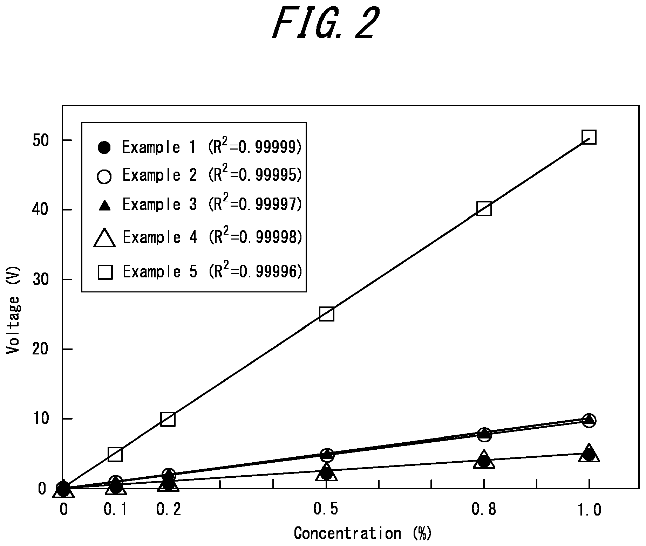

FIG. 2 illustrates the concentrations of the component to be measured, the corresponding voltage outputs, the approximate line thereof, and the R² value in the present Example. In FIG. 2, the black circles represent the graph of the results of the present Example. The results yielded an R² value exceeding 0.9999, indicating that the device is resistant to noise and can perform measurements with a high S/N ratio. Furthermore, the lower limit of detection calculated based on this approximate line was 10 ppm by volume (hereinafter simply referred to as ppm), indicating a sufficiently high detection sensitivity for practical use. In the present Example, a detection sensitivity of 20 ppm or more is evaluated as being sufficiently high for practical use.

### (Example 2)

The present Example differed from Example 1 in that the component to be measured was vaporized MoO₂Cl₂ (molybdenum dichloride dioxide), and the optical filter in the filter window of the measuring device was changed to one that transmitted only ultraviolet light in a specific wavelength band of 296.7 nm, which is the central absorption wavelength of hydrazine (central wavelength: 296.7 nm, bandwidth: 40 nm, wavelength band: 276.7 nm or more and 316.7 nm or less). Otherwise, Example 2 was the same as Example 1, and the lower limit of detection representing the measurement sensitivity of the measuring device and the R² value representing the measurement noise were determined. The mixed gas serving as the gas to be measured was prepared by heating solid molybdenum dichloride dioxide to 200° C to vaporize it and then diluting the result with nitrogen gas. FIG. 2 together illustrates the concentrations of the component to be measured, the corresponding voltage outputs, the approximate line thereof, and the R² value in the present Example. In FIG. 2, the white circles represent the graph of the results of the present Example. These results as well yielded an R² value exceeding 0.9999, indicating that the device is resistant to noise and can perform measurements with a high S/N ratio. Furthermore, the lower limit of detection was 5 ppm, indicating a detection sensitivity that was sufficiently high for practical use, as in Example 1.

### (Example 3)

The present Example differed from Example 1 in that the gas to be measured was a mixed gas yielded by mixing a dilution gas, containing 1 vol% of B₂H₆ (diborane) as the component to be measured diluted using H₂ (hydrogen), with nitrogen as a carrier gas, and the optical filter in the filter window of the measuring device was changed to one that transmits only vacuum ultraviolet light with a wavelength around 125 nm, which is the central absorption wavelength of diborane (central wavelength: 125 nm, bandwidth: 20 nm, wavelength band: 115 nm or more and 135 nm or less). Otherwise, Example 3 was the same as Example 1, and the lower limit of detection representing the measurement sensitivity of the measuring device and the R² value representing the measurement noise were determined. That is, the mixed gas used as the gas to be measured in the present Example contains diborane as the gas to be measured and hydrogen and nitrogen as carrier gases. FIG. 2 together illustrates the concentrations of the component to be measured, the corresponding voltage outputs, the approximate line thereof, and the R² value in the present Example. In FIG. 2, the black triangles represent the graph of the results of the present Example. These results as well yielded an R² value exceeding 0.9999, indicating that the device is resistant to noise and can perform measurements with a high S/N ratio. Furthermore, the lower limit of detection was 5 ppm, indicating a detection sensitivity that was sufficiently high for practical use, as in Example 1.

### (Example 4)

The present Example differed from Example 1 in that the component to be measured was changed to vaporized IPA (isopropanol), the carrier gas was changed to CO₂ (carbon dioxide), and the optical filter in the filter window of the measuring device was changed to one that transmitted only vacuum ultraviolet light with a wavelength around 135 nm, which is the central absorption wavelength of isopropanol (central wavelength: 135 nm, bandwidth: 10 nm, wavelength range: 130 nm or more and 140 nm or less). Otherwise, Example 4 was the same as Example 1, and the lower limit of detection representing the measurement sensitivity of the measuring device and the R² value representing the measurement noise were determined. In the present Example, the carrier gas (carbon dioxide) and the gas in the atmosphere (nitrogen) inside the first container and the second container are different. FIG. 2 together illustrates the concentrations of the component to be measured, the corresponding voltage outputs, the approximate line thereof, and the R² value in the present Example. In FIG. 2, the white triangles represent the graph of the results of the present Example. These results as well yielded an R² value exceeding 0.9999, indicating that the device is resistant to noise and can perform measurements with a high S/N ratio. Furthermore, the lower limit of detection was 5 ppm, indicating a detection sensitivity that was sufficiently high for practical use, as in Example 1.

### (Example 5)

The present Example differed from Example 3 in that a condenser lens was installed between the light source unit of the measuring device and the cell. Otherwise, Example 5 was the same as Example 3, and the lower limit of detection representing the measurement sensitivity of the measuring device and the R² value representing the measurement noise were determined. FIG. 2 together illustrates the concentrations of the component to be measured, the corresponding voltage outputs, the approximate line thereof, and the R² value in the present Example. In FIG. 2, the white squares represent the graph of the results of the present Example. These results as well yielded an R² value exceeding 0.9999, indicating that the device is resistant to noise and can perform measurements with a high S/N ratio. Furthermore, the lower limit of detection was 1 ppm, indicating a higher detection sensitivity than in Example 3.

### (Examples 6 to 9)

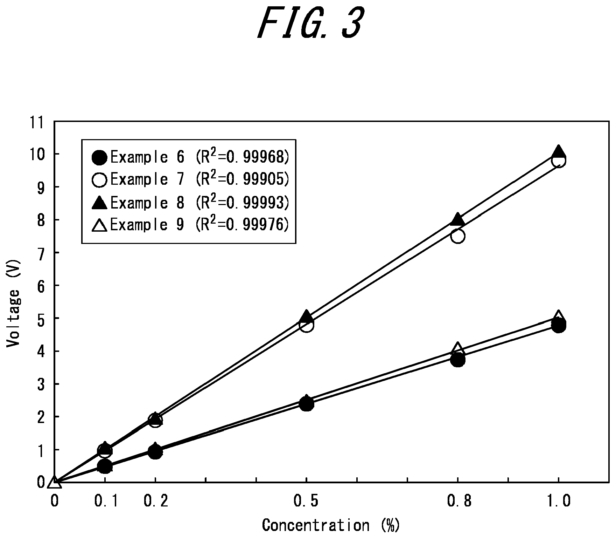

Examples 6 to 9 differed from Examples 1 to 4 in that no optical filter was used in the measuring device, and the window at the exit portion was a transparent window made of magnesium fluoride. Otherwise, Examples 6 to 9 were the same as Examples 1 to 4. FIG. 3 together illustrates the concentrations of the component to be measured, the corresponding voltage outputs, the approximate lines thereof, and the R² values in Examples 6 to 9. In FIG. 3, the black circles, white circles, black triangles, and white triangles represent the graphs illustrating the results of Examples 6 to 9 in this order. The R² values in Examples 6 to 9 exceeded 0.999, which is not as high as that in Examples 1 to 5 but indicated sufficient resistance to noise for practical use and the ability to perform measurements with a high S/N ratio. The lower limits of detection for Examples 6 to 9 were 1 ppm, 0.5 ppm, 0.5 ppm, and 1 ppm, respectively, indicating a higher detection sensitivity than in Examples 1 to 5.

### (Comparative Example 1)

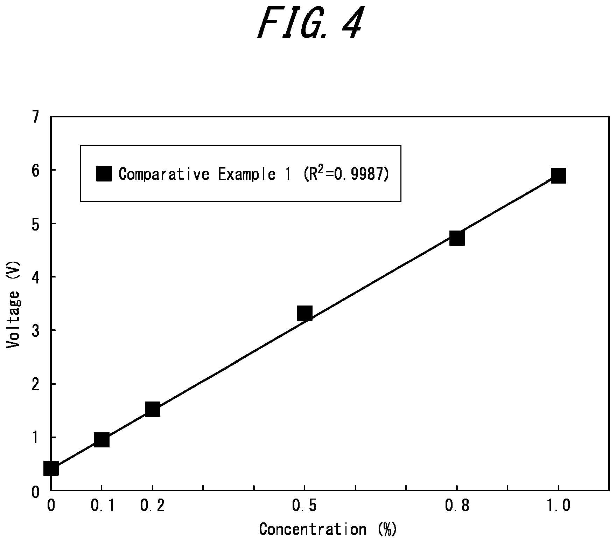

This Comparative Example differed from Example 1 in that no optical filter was used in the measuring device, the window at the exit portion was a transparent window made of magnesium fluoride, the first container and the second container were removed, and the space including the optical path between the irradiation window of the light source unit and the entrance part of the cell and the space including the optical path between the exit portion of the cell and the light guide window of the light receiver were replaced with atmospheric environments. Otherwise, the Comparative Example was the same as Example 1, and the lower limit of detection representing the measurement sensitivity of the measuring device and the R² value representing the measurement noise were determined. FIG. 4 illustrates the concentrations of the component to be measured, the corresponding voltage outputs, the approximate line thereof, and the R² value in the Example. These results yielded an R² value of less than 0.999, indicating that the measurement was susceptible to noise and had a low S/N ratio. Furthermore, the lower limit of detection was 100 ppm at most, indicating a low detection sensitivity, unlike for each of the Examples.

The results of the above Examples and Comparative Example indicate that in the case of using ultraviolet light of a specific wavelength band as a light source for measurement, if the gas concentration measuring device and gas concentration measuring method according to the present embodiment are followed as in each Example, that is, if the optical path of the ultraviolet light of the specific wavelength band between the light source unit and the light receiver (excluding the inside of the cell) is filled with a non-interfering gas, which is a gas that does not have an absorption wavelength overlapping with the component to be measured in the ultraviolet wavelength band, then highly sensitive measurements can be performed. It is inferred that the same effect can also be achieved in the case of evacuating the optical path of ultraviolet light of a specific wavelength band between the light source unit and the light receiver (excluding the inside of the cell) instead of filling the optical path with a non-interfering gas. Furthermore, it is clear that when an optical filter is placed on the optical path of ultraviolet light of a specific wavelength band between the light source unit and the light receiver, sensitivity is sufficiently high for practical use, and measurements that are resistant to noise and have a high S/N ratio can be performed.

In particular, Example 5 achieved higher detection sensitivity than Example 3, and it is believed that the condenser lens contributed to the improvement in sensitivity.

As described above, a gas concentration measuring device and a gas concentration measuring method that improve sensitivity during measurement when ultraviolet light of a specific wavelength band is used as the light source for measurement can be provided.

### [Other embodiments]

(1) In the above embodiment, a case has been described in which the cell 1 in the gas concentration measuring device 100 has a cylindrical portion 10 having a linear internal space, and an incident portion 11 and an exit portion 12 arranged at the ends of the cylindrical portion 10. In the cell 1, while the gas to be measured is caused to flow through the cylindrical portion 10, ultraviolet light of a specific wavelength band introduced from the incident portion 11 is transmitted through the gas to be measured and is then guided out of the cell 1 from the exit portion 12. However, the gas concentration measuring device 100 and its cell 1 are not limited to this configuration.

For example, the cell 1 may be constructed on a transparent substrate that transmits ultraviolet light in a specific wavelength band. In this case, the transparent substrate may be made of magnesium fluoride. The cell 1 may also be a so-called MEMS (Micro Electro Mechanical Systems).

An embodiment of the gas concentration measuring device 100 in the case in which the cell 1 is formed as a MEMS is as follows. A fine flow path for passing the gas to be measured may be formed in the transparent substrate serving as the cell 1. Ultraviolet light of a specific wavelength band is then irradiated from the light source unit 2 along an optical path that passes through this fine flow path from one side of the plate surface of the cell 1, and the transmitted light is received by the light receiver 3 on the other side of the plate surface of the cell 1, thereby making it possible to measure the concentration of the component to be measured.

In this case, the irradiation window 20 of the light source unit 2, the entire cell 1, and the light guide window 30 of the light receiver 3 are covered with a container, thereby enclosing the optical path L of ultraviolet light of a specific wavelength band between the light source unit 2 and the cell 1 and the optical path L of ultraviolet light of a specific wavelength band between the cell 1 and the light receiver 3, and the internal atmosphere of the container can be controlled to be a vacuum or to be filled with a specific gas.

As described in the above embodiment, the gas concentration measuring device and gas concentration measuring method according to the present embodiment can improve sensitivity during measurement, so that even if the optical path length of ultraviolet light of a specific wavelength band that passes through the gas to be measured is shortened by, for example, reducing the size of the cell 1 or the flow path for the gas to be measured within the cell 1, a practical measurement accuracy can still be ensured. In other words, the gas concentration measuring device and gas concentration measuring method according to the present embodiment can be applied to both a scale that allows the gas to be measured to flow at a level required for in-line measurement (large scale) and a minute scale such as that referred to as MEMS.

(2) In the above embodiment, as illustrated in FIG. 1, a case has been described in which the condenser lens 7 is disposed on the optical path L of the ultraviolet light of a specific wavelength band between the light source unit 2 and the cell 1 in the gas concentration measuring device 100. It was also described that the irradiation window 20, the condenser lens 7, and the window 41 are preferably arranged in this order along the optical path L in overlap with the optical path L, and that the condenser lens 7 and the window 41 are preferably spaced a certain distance apart. However, the arrangement of the condenser lens 7 is not limited to this example.

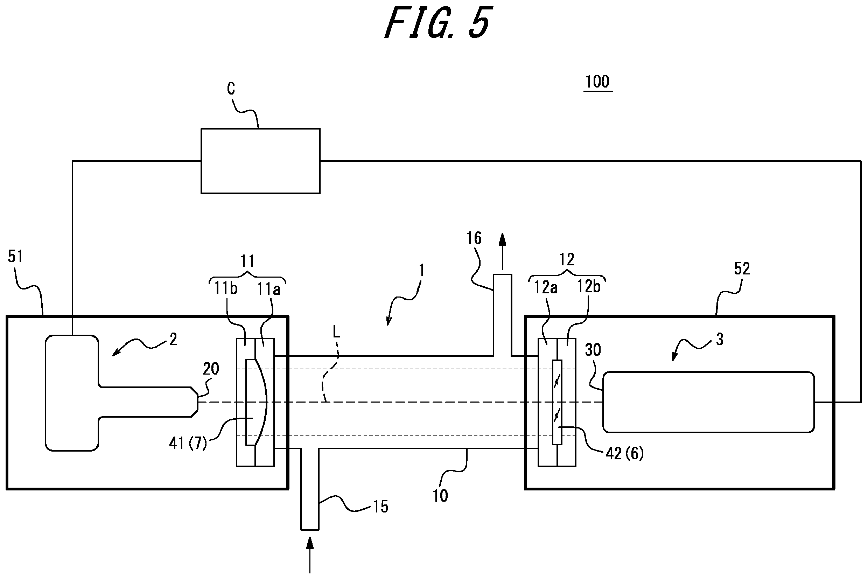

For example, as illustrated in FIG. 5, in the gas concentration measuring device 100, the window 41 may also serve as the condenser lens 7. FIG. 5 further illustrates an example in which the window 42 is the filter window 6. By having the window 41 also function as the condenser lens 7, the size of the gas concentration measuring device 100 can be reduced.

(3) In the above embodiment, as illustrated in FIGS. 1 and 6, a case has been described in which at least one of the window 41 and the window 42 may be the filter window 6 that has a substrate (window) formed of a material that can transmit ultraviolet light of a specific wavelength band, and an optical filter arranged on the substrate. However, the optical filter does not necessarily have to be disposed on the window 41 or the window 42. The optical filter may be disposed on the optical path L of the ultraviolet light of the specific wavelength band between the light source unit 2 and the light receiver 3.

(4) In the above embodiment, as illustrated in FIG. 1, a case has been described in which the irradiation window 20, the condenser lens 7, and the window 41 are arranged in this order along the optical path L in overlap with the optical path L in the gas concentration measuring device 100. The case in which the window 41 is the filter window 6 that has a substrate formed of a material that can transmit ultraviolet light in a specific wavelength band and an optical filter disposed on the substrate has also been described as an example. However, the arrangement of the optical filter is not limited to these examples. For example, an optical filter may be disposed between the irradiation window 20 and the condenser lens 7. That is, the irradiation window 20, the optical filter, the condenser lens 7, and a window 41 without an optical filter may be arranged in this order along the optical path L in overlap with the optical path L.

It should be noted that the embodiments disclosed in this specification are merely non-limiting examples of embodiments of the present disclosure, and embodiments can be modified as appropriate within the scope of the purpose of the present disclosure.

### INDUSTRIAL APPLICABILITY

The present disclosure can be applied to gas concentration measuring devices and gas concentration measuring methods.

### REFERENCE SIGNS LIST

- 1: Cell
- 10: Cylindrical portion
- 100: Gas concentration measuring device
- 11: Incident portion
- 11a: Seat
- 11b: Lid
- 12: Exit portion
- 12a: Seat
- 12b: Lid
- 15: Inlet
- 16: Outlet
- 2: Light source unit (light source)
- 20: Irradiation window
- 3: Light receiver
- 30: Light guide window
- 41: Window
- 42: Window
- 51: First container
- 52: Second container
- 6: Filter window
- 7: Condenser lens
- C: Controller
- L: Optical path

## Claims

1. A gas concentration measuring device comprising:
a cell through which a gas to be measured including a component to be measured and a carrier gas flows;
a light source configured to irradiate the gas to be measured flowing through the cell with ultraviolet light having a wavelength of 115 nm or more and 320 nm or less;
a light receiver configured to receive transmitted light of the ultraviolet light that has passed through the gas to be measured;
a first container enclosing a space including an optical path of the ultraviolet light between the light source and the cell; and
a second container enclosing a space including an optical path of the transmitted light between the cell and the light receiver.

2. The gas concentration measuring device according to claim 1, wherein the first container and the second container are evacuated or filled with a non-interfering gas that does not have an absorption wavelength overlapping with the component to be measured in a wavelength band of the ultraviolet light.

3. The gas concentration measuring device according to claim 2, wherein the non-interfering gas is a same type of gas as the carrier gas.

4. The gas concentration measuring device according to claim 2 or 3, wherein the non-interfering gas is nitrogen, hydrogen, helium, argon, or carbon dioxide.

5. The gas concentration measuring device according to claim 1 or 2, further comprising
an optical filter disposed on the optical path of the ultraviolet light between the light source and the light receiver,
wherein the ultraviolet light continuously includes light having a wavelength in a range of 115 nm or more and 320 nm or less, and
wherein a bandwidth of a wavelength band transmitted by the optical filter is 5 nm or more and 50 nm or less.

6. The gas concentration measuring device according to claim 1 or 2,
wherein the ultraviolet light continuously includes light having a wavelength in a range of 115 nm or more and 320 nm or less, and
wherein no spectroscope is disposed between the light source and the light receiver.

7. The gas concentration measuring device according to claim 1 or 2,
wherein the first container encloses an end of the cell on a side of the light source, and
wherein the second container encloses an end of the cell on a side of the light receiver.

8. A gas concentration measuring method comprising:
causing a gas to be measured to flow through a cell, the gas to be measured being a mixture of a component to be measured that has an absorption wavelength in a wavelength band of ultraviolet light having a wavelength of 115 nm or more and 320 nm or less and a carrier gas that has no absorption wavelength in the wavelength band of the ultraviolet light;
irradiating the gas to be measured flowing through the cell with the ultraviolet light; and
receiving transmitted light of the ultraviolet light that has passed through the gas to be measured,
wherein an optical path of the ultraviolet light is evacuated or filled with a non-interfering gas that does not have an absorption wavelength overlapping with the component to be measured in the wavelength band of the ultraviolet light.

9. The gas concentration measuring method according to claim 8, wherein the non-interfering gas is a same type of gas as the carrier gas.

10. The gas concentration measuring method according to claim 8 or 9, wherein the non-interfering gas is nitrogen, hydrogen, helium, argon, or carbon dioxide.

11. The gas concentration measuring method according to claim 8 or 9,
wherein the irradiating or the receiving includes filtering to select a specific wavelength band,
wherein the ultraviolet light continuously includes light having a wavelength in a range of 115 nm or more and 320 nm or less, and
wherein a bandwidth of a wavelength band transmitted by the filtering is 5 nm or more and 50 nm or less.

12. The gas concentration measuring method according to claim 8 or 9, wherein the gas to be measured includes an impurity gas that has no absorption wavelength in the wavelength band of the ultraviolet light.

13. The gas concentration measuring method according to claim 8 or 9, wherein the component to be measured included in the gas to be measured is one type.

14. The gas concentration measuring method according to claim 8 or 9,
wherein the ultraviolet light continuously includes light having a wavelength in a range of 115 nm or more and 320 nm or less, and
wherein the receiving does not include spectral separation of light.

15. The gas concentration measuring method according to claim 8 or 9, wherein a space including both ends of the cell is evacuated or filled with the non-interfering gas.
